# EUROPEAN PATENT SPECIFICATION

(11) **EP 0 756 512 B1**
(45) Date of publication and mention of the grant of the patent: **06.05.1999**
(21) Application number: 95908976.4
(22) Date of filing: 22.02.1995
(51) Int. Cl.: B01D 35/14, B01D 35/147, B01D 27/10

(54) **FILTER PROVIDED WITH A BYPASS OPENING**
VON EINER BYPASSÖFFNUNG VERSEHENER FILTER
FILTRE POURVU D'UN ORIFICE DE DERIVATION

(43) Date of publication of application: 05.02.1997
(73) Proprietor: PARKER HANNIFIN OY, 31700 Urjala As (FI)
(72) Inventor: KOIVULA, Tuomo, FIN-31720 Urjalankylä (FI)
(74) Representative: Saijonmaa, Olli-Pekka
(86) International application number: FI9500092
(87) International publication number: WO9625995

(56) References cited:
- WO-A-89/00881
- DE-A- 2 800 486
- DE-A- 4 243 217
- FR-A- 2 010 841

## Description

The invention relates to a filter comprising a filtering element in the form of a casing, a support at an end of the filtering element, the filtering element being separable from the support, at least one inlet opening for conducting a stream of fluid to be filtered to the inside of the filtering element, to let the fluid permeate the wall of the filtering element to the outside of the element, and a spring providing a prestress force acting between the support and the filtering element so that a fluid pressure within the filtering element exceeding the prestress force causes the support and the filtering element to be dislodged relative to each other so as to form a by-pass opening allowing the fluid to pass unfiltered to the outside of the filtering element.

Filters of the type described above are used for instance in hydraulic systems to cleanse hydraulic and lubricating oils from dirt. The filter may be mounted for instance in the cover of an oil tank or in a piping conveying oil. The filtering envelope may consist of a metal mesh and a paper or glass fibre layer supported against this. The purpose of prestressing the envelope and the holder against each other is to provide a by-pass valve in the event that the envelope is clogged, the by-pass valve allowing the stream of material to be filtered to pass by the envelope as the pressure exceeds the threshold value formed by the prestressing, thus avoiding malfunctions of the system and any damage to the filter.

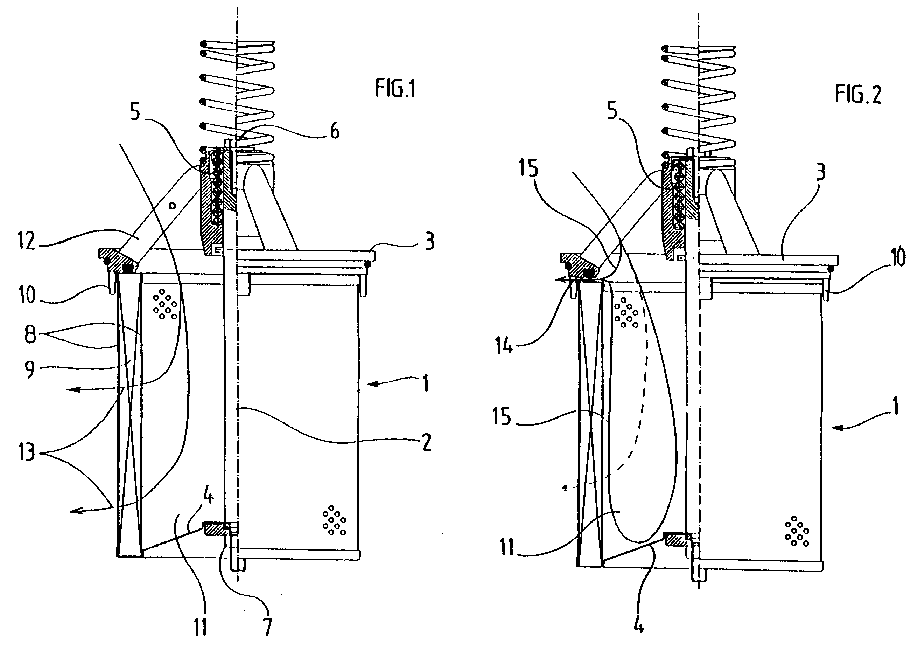

Figures 1 and 2 in the accompanying drawing illustrate a prior-art filter of the type typically used in hydraulic systems. Figure I is a partial vertical section of the filter in normal operating position and figure 2 is a view of the same filter with the by-pass opening opened up.

The filter illustrated in figures 1 and 2 comprises a filter element 1 with its envelope shaped as a circular cylinder, a shaft bar 2 and a stationary support 3 of the filter element. The end of the filter element envelope opposite to the support is sealed with a closed cover 4. The filter element 1 is pressed against the support 3 by a prestressing spring 5 surrounding the shaft bar 2 and attached to the bar with a clamping screw 6. This arrangement allows the filter element 1 to move axially relative to the support 3 against the springback force. The filter element 1 is attached to the shaft bar 2 with a clamping nut 7 pressing the cover 4 such that the bar will move along with the filter element.

The cylindrical envelope of the filter element 1 consists of nested, permeable metal meshes 8 and an intermediate filtering material layer 9, made for instance of paper or glass fibre. The support 3 is provided with pin-like guides 10 surrounding the upper end of the envelope 1 and retaining the envelope in place as the element is dislodged.

The annular support 3 is equipped with inlet openings 12 for the stream to be filtered opening up into the space 11 defined by the envelope of the filtering element 1. The openings 12 are located on the distances between the radial sides of the circumference of the support 3 and the casing surrounding the shaft bar 2 and the spring 5. A stream of for instance polluted hydraulic oil flows from the openings 12 into the cylindrical space 11, clean oil being filtered through the envelope 8, 9 to the outside of the filter as indicated by arrows 13 in figure 1, so that the dirt is caught on the inner surface of the envelope and in the filtering material layer 9.

In the normal operating position of the filter, the envelope of the filtering element 1 fixed in place with the nut 7 is pressed against the support 3 by means of the shaft bar 2 and the spring 5. As the filtering material 9 is gradually being clogged, the permeability of the envelope 8, 9 drops, while the pressure produced by the entering stream increases in the space 11 within the envelope. As this pressure exceeds the prestress of the filtering element 1 against the support 3 generated by the spring 5, the element will yield, shifting against the spring parallel to the shaft bar 2, and consequently leaving an annular by-pass opening 14 between the support and the upper end of the element envelope, as shown in figure 2. In this situation a major portion of the stream win be conducted through the slot 14 passing by the envelope 8, 9 outside the filter, as indicated with lines 15 in figure 2.

In the prior-art filter configuration described above, the cylindrical filtering element 1 is mounted at assembly by screwing the clamping nut 7 all the way to the bottom, the upper end of the element envelope thus being pressed against the support 3 as the spring 5 is pressed, generating prestress between the members. The filtering element 1 has been dimensioned such that the prestress equals a desired threshold value of the pressure opening up the by-pass opening 14. However, due to large manufacturing tolerances, the filtering elements 1 do not always have exactly the same length, and this entails the problem that, as a clogged or otherwise worn-out element is being replaced, there may be a change in the prestress of the construction, and thus in the pressure opening up the by-pass opening 14. Yet an optimal operation of the system would require this pressure to be exactly maintained.

Another problem entailed by the prior-art filtering design described above is that, as the by-pass opening 14 has opened up, turbulent streams will be generated in the space 11 within the filtering element envelope 1, these turbulences attracting dirt from the inner surface of the envelope and subsequently passing into the by-pass opening 14, as shown in figure 2. In this situation, dirt having already been separated by the filter from the stream to be filtered will pass by the envelope 1.

The purpose of this invention is to provide a design allowing the drawbacks of the conventional filter configuration mentioned above to be eliminated. The filter of the invention is characterised in that the filter comprises a frame 17 located between the support 3 and the filtering element 1, the spring 5 being mounted to prestress the frame against the support to let the by-pass opening 14 be formed between the frame and the support, and the filtering element being attached to the frame removably and independently of the prestress force between the support and the frame.

In the design of the invention, prestressing is generated between the filtering element frame and the support by using an appropriate clamp, independently of the filtering element envelope and the attachment of the element. In other words, the length of the element envelope will not affect prestressing. This enables the prestress between the frame and the support to be accurately controlled to the desired level by means of the prestressing spring and its attachment and this prestress will be maintained in the filter, because there will be no need to act on the mounting of these members as the filtering element is being replaced. Moreover, this arrangement enables the clamp of the prestressing spring, such as a clamping screw or nut, to have various prestressing degrees and graded clamping positions corresponding to the pressures opening up the by-pass opening, thus allowing the opening pressure to be varied when desired. The invention has the further advantage that, as the cylindrical filtering element does not have to support and maintain the prestress required, its design and material requirements are no longer critical in this respect. It suffices if the element is stiff enough to remain in place in the filter under the operating pressures prevailing in the cylinder.

The filter of the invention preferably comprises a shaft bar passing axially through the cylindrical filtering element serving to prestress the frame and the support against each other, to which the element is attached at its end opposite to the frame. The shaft bar may preferably consist of two removably interconnected members such that the first member connects the support with the frame fixed in this member and the second member forms a removable extension of the first member extending to the stationary cover at the opposite end of the filtering element. When desired, the second member of the bar can thus be replaced with a member of a different length, allowing filtering elements of various lengths to be used in the filter without affecting the prestress between the support and the frame, nor the pressure opening up the by-pass opening.

In terms of the invention, it is also possible to act on the streams occuring after the by-pass inlet has opened up into the filter with the shape and the position of the flow openings defined by the frame, and hence to prevent dirt already caught in the filtering element from rejoining the stream and passing through the filter.

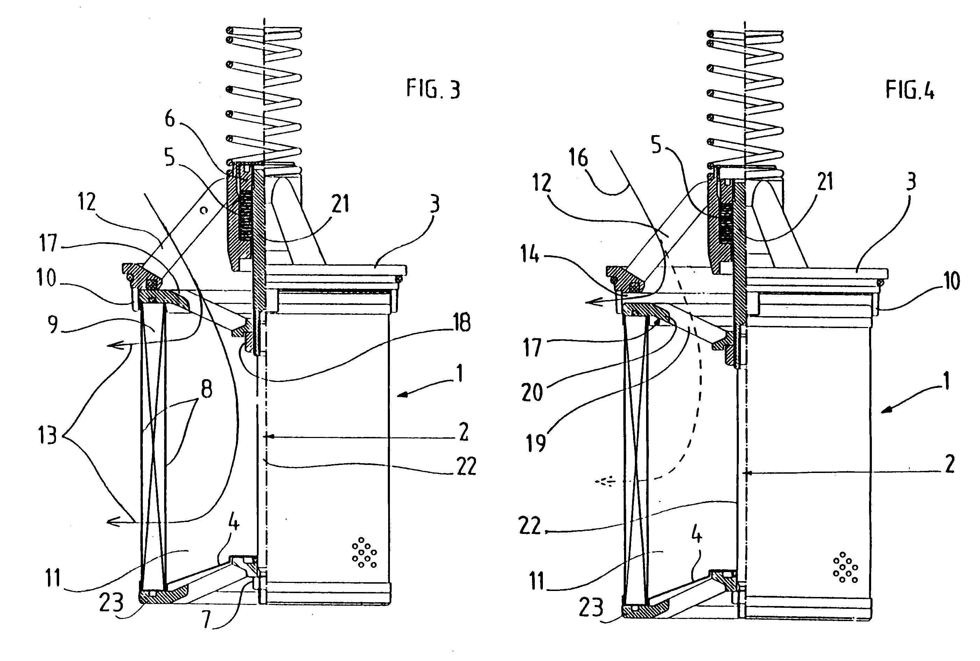

An example of the filter of the invention is illustrated in the accompanying figures 3 and 4, figure 3 being a partly sectional view of a normally operating filter with the lines 13 indicating the flow of the stream to be filtered and figure 4 respectively indicating with flow lines 16 a filter with the by-pass inlet opened.

The filter of the invention shown in figures 3 and 4 basically corresponds to the prior-art filter in figures 1 and 2 described above, and for this reason we shall proceed to explain the members and operations of the inventive filter alone that differ from the previously known filter. In other respects, the facts disclosed in conjunction with figures 1 and 2 also apply to the filter of the invention.

The prestress corresponding to the opening pressure of the by-pass opening 14 is generated in the filter of the invention between the stationary support 3 and the frame 17 placed immediately inside this, pressed by the spring against the support. The frame 17 is attached to the shaft bar 2 with a nut 18. As the pressure in the cylindrical space 11 exceeds the prestress between the support 3 and the frame 17, the frame moves axially towards the spring 5, thus leaving a by-pass opening 14 between the support 3 and the frame 17.

In figures 3 and 4 the flow inlets 19 defined by the frame 17 and opening up into the cylindrical space 11 within the filter are retracted from the outer edge of the frame such that the links 20 between the inlets and the frame edge bar the flows passing from the cylindrical space 11 to the opened by-pass inlet 14. This design serves to prevent or at least to essentially reduce dirt already caught in the filtering element 1 from escaping from the filter.

In the filter illustrated in figures 3 and 4, the shaft bar 2 consists of two members 21, 22 interconnected with a screwjoint. The first member 21 of the bar connects the support 3 with the frame 17 mounted in this member 21 with a nut 18. The second member 22 of the bar, which can be unscrewed from the member 21, lodges the support 23 mounted with a nut 7 and bearing against the cover 4 of the element. As a result, the support 23 and the cylindrical filtering element I retained by it do not have an impact on the prestress between the frame 17 and the support 3. This means that the length of the filtering element envelope 1 and manufacturing tolerances do not affect the operation of the filter, and in the filter embodiment shown, it is possible to use filtering elements 1 of various lengths by appropriately replacing the second shaft member 22. Accordingly, the filtering element 1 may consist of nested metal meshes 8 and an intermediate filtering material layer 9, however, since the invention does not require the element envelope to maintain the prestress, other envelope designs and materials having lower dimensional stability are also conceivable in terms of the invention.

The filter of the invention is assembled by first attaching the frame 17 to the support 3 with a nut 18 screwed into the shaft bar 2, and by subsequently adjusting the prestress between these exactly to the desired level using the clamping screw 6 and the nut 18. After this, the cylindrical filtering element 1 is fixed with the support 23 and a nut screwed into the lower end of the bar 2. As the clogged filtering element 1 is replaced, there is no need to touch the mounting between the frame 17 and the support 3, unless the pressure opening up the by-pass opening 14 is to be varied for some reason. When desired, this variation can be accomplished by adjusting the spring 5 with the clamping screw 6, which may be provided with pregraded positions corresponding to various pressures. In filters of hydraulic systems, 1.2 bar and 1.6 bar opening pressures are commonly used pressures.

It is obvious to those skilled in the art that the embodiments of the invention are not confined to the example described above, but may vary within the scope of the accompanying claims. Thus, the closed cover 4 of the filtering element 1 and its support 23 may be constructed as a single, integrated piece. Also, the filtering element 1 does not necessarily have the shape of a circular cylinder, but may for instance be conically tapered within the scope of the invention. It is further possible that not the support, but the frame bearing against it is stationary, and in that case the support is movable relative to the frame.

## Claims

1. A filter comprising a filtering element (1) in the form of a casing, a support (3) at an end of the filtering element, the filtering element being separable from the support, at least one inlet opening (12) for conducting a stream of fluid to be filtered to the inside of the filtering element, to let the fluid permeate the wall (8, 9) of the filtering element to the outside of the element, and a spring (5) providing a prestress force acting between the support and the filtering element so that a fluid pressure within the filtering element exceeding the prestress force causes the support and the filtering element to be dislodged relative to each other so as to form a by-pass opening (14) allowing the fluid to pass unfiltered to the outside of the filtering element, **characterised** in that the filter comprises a frame (17) located between the support (3) and the filtering element (1), the spring (5) being mounted to prestress the frame against the support to let the by-pass opening (14) be formed between the frame and the support, and the filtering element being attached to the frame removably and independently of the prestress force between the support and the frame.

2. A filter as claimed in claim 1, **characterised** in that the frame (17) and the filtering element (1) removably attached to it have been disposed to be dislodged relative to the stationary support (3) under the effect of pressure.

3. A filter as claimed in claim 1 or 2, **characterised** in that the frame (17) and the support (3) are interconnected by a shaft bar (2), and in that prestress has been generated by means of a clamping nut (18) screwed into the shaft bar.

4. A filter as claimed in claim 3, **characterised** in that the shaft bar (2) extends through the filtering element (1) all the way to its end opposite to the frame (17), at which the element is attached to the end of the shaft bar by means of a nut (7) or any similar fixing means.

5. A filter as claimed in claim 4, **characterised** in that the shaft bar (2) consists of two removably interconnected members such that the first member (21) connects the support (3) with the frame (17) and the second member (22) forms a removable extension of the first part extending to the end of the filtering element (1) opposite to the frame.

6. A filter as claimed in any of the preceding claims, **characterised** in that the casing-like filtering element (1) comprises an envelope of a permeable filtering material (9) and a closed cover (4) at its end.

7. A filter as claimed in any of the preceding claims, **characterised** in that the filtering element (1) comprises a permeable envelope (8, 9) having the shape of a circular cylinder.

8. A filter as claimed in any of the preceding claims, **characterised** in that the by-pass opening (14) is a substantially annular inlet opening up between the annular support (3) and the frame (17) bearing against it.

9. A filter as claimed in any of the preceding claims, **characterised** in that the support (3) is provided with one or more inlet openings (12) for the strean (13) to be filtered to be conducted inside the filtering element.

10. A filter as claimed in claims 8 and 9, **characterised** in that the frame (17) defines flow openings (19) retracted from its edge such that links (20) between the openings and the frame edge bar the back flow returning from the filtering element (1) towards the by-pass opening (14).

## Patentansprüche

1. Filter mit einem Filterelement (1) in der Form eines Gehäuses, einem Trägerteil (3) an einem Ende des Filterelementes, wobei das Filterelement von dem Trägerteil trennbar ist, wenigstens einer Einlaßöffnung (12) zum Leiten eines zu filternden Fluidstromes zur Innenseite des Filterelementes, um das Fluid die Wand (8, 9) des Filterelementes zur Außenseite des Elementes durchdringen zu lassen, und einer Feder (5), die eine Vorspannkraft liefert, die zwischen dem Trägerteil und dem Filterelement wirkt, so daß ein Fluiddruck in dem Filterelement, der die Vorspannkraft übersteigt, bewirkt, daß das Trägerteil und das Filterelement relativ zueinander bewegt werden, um getrennt zu werden, um eine Bypassöffnung (14) zu bilden, die es ermöglicht, daß Fluid ungefiltert zur Außenseite des Filterelementes gelangt, **dadurch gekennzeichnet**, daß das Filter ein Rahmenteil (17) aufweist, das zwischen dem Trägerteil (3) und dem Filterelement (1) angeordnet ist, daß die Feder (5) montiert ist, um das Rahmenteil gegen das Trägerteil vorzuspannen, um es zu ermöglichen, daß die Bypassöffnung (14) zwischen dem Rahmenteil und dem Trägerteil ausgebildet wird, und daß das Filterelement an dem Rahmenteil abnehmbar und unabhängig von der Vorspannungskraft zwischen dem Trägerteil und dem Rahmenteil befestigt ist.

2. Filter nach Anspruch 1, **dadurch gekennzeichnet**, daß das Rahmenteil (17) und das abnehmbar an ihm befestigte Filterelement (1) so angeordnet sind, daß sie relativ zu dem stationären Trägerteil (3) unter der Wirkung des Druckes bewegt werden, um getrennt zu werden.

3. Filter nach Anspruch 1 oder 2, **dadurch gekennzeichnet**, daß das Rahmenteil (17) und das Trägerteil (3) durch einen Schaftstab (2) miteinander verbunden sind und daß die Vorspannung durch eine Klemmmutter (18) erzeugt wurde, die am Schaftstab verschraubt ist.

4. Filter nach Anspruch 3, **dadurch gekennzeichnet**, daß der Schaftstab (2) sich durch das Filterelement (1) entlang seiner gesamten Länge bis zu seinem Ende gegenüber dem Rahmenteil (17) erstreckt, an dem das Element am Ende des Schaftstabes mit der Hilfe einer Mutter (7) oder einer ähnlichen Befestigungseinrichtung befestigt ist.

5. Filter nach Anspruch 4, **dadurch gekennzeichnet**, daß der Schaftstab (2) aus zwei lösbar miteinander verbundenen Gliedern besteht, so daß das erste Glied (21) das Trägerteil (3) mit dem Rahmenteil (17) verbindet und das zweite Glied (22) eine lösbare Verlängerung des ersten Gliedes bildet, die sich zum Ende des Filterelementes (1) gegenüber dem Rahmenteil erstreckt.

6. Filter nach einem der vorhergehenden Ansprüche, **dadurch gekennzeichnet**, daß das gehäuseähnliche Filterelement (1) eine Umhüllung aus einem permeablen Filtermaterial (9) und einen geschlossenen Deckel (4) an seinem Ende aufweist.

7. Filter nach einem der vorhergehenden Ansprüche, **dadurch gekennzeichnet**, daß das Filterelement (1) eine permeable Umhüllung (8, 9) in der Form eines Kreiszylinders aufweist.

8. Filter nach einem der vorhergehenden Ansprüche, **dadurch gekennzeichnet**, daß die Bypassöffnung (14) ein im wesentlichen ringförmiger Einlaß ist, der sich zwischen dem ringförmigen Trägerteil (3) und dem sich an diesem abstützenden Rahmenteil (17) öffnet.

9. Filter nach einem der vorhergehenden Ansprüche, **dadurch gekennzeichnet**, daß das Trägerteil (3) eine oder mehrere Einlaßöffnungen (12) aufweist, um den zu filternden Strom (13) zur Innenseite des Filterelementes zu leiten.

10. Filter nach Anspruch 8 oder 9, **dadurch gekennzeichnet**, daß das Rahmenteil (17) Flußöffnungen (19) bestimmt, die von seinem Rand derart zurückgezogen sind, daß Verbindungsglieder (20) zwischen den Öffnungen und dem Rand des Rahmens den vom Filterelement (1) in Richtung auf die By-passöffnung (14) zurückkehrenden Rückfluß blockieren.

## Revendications

1. Filtre comprenant un élément filtrant (1) se présentant sous la forme d'un boîtier, un support (3) situé à une extrémité de l'élément filtrant, l'élément filtrant étant séparable du support, au moins une ouverture d'entrée (12) pour conduire un courant de fluide à filtrer à l'intérieur de l'élément filtrant, afin de laisser le fluide pénétrer à travers la paroi (8,9) de l'élément filtrant vers l'extérieur de l'élément, et un ressort (5) fournissant une force de mise en précontrainte agissant entre le support et l'élément filtrant, de façon qu'une pression de fluide à l'intérieur de l'élément filtrant supérieure à la force de précontrainte, entraine le support et l'élément filtrant à se déplacer l'un par rapport à l'autre, de façon à constituer une ouverture de dérivation (14) permettant au fluide de passer sans être filtré vers l'extérieur de l'élément filtrant , caractérisé en ce que le filtre comprend un bâti (17) placé entre le support (3) et l'élément filtrant (1), le ressort (5) étant monté de façon à mettre en précontrainte le bâti contre le support afin de maintenir l'ouverture de dérivation (14) à former entre le bâti et le support, et l'élément filtrant étant fixé au bâti de façon amovible et indépendamment de la force de précontrainte s'exerçant entre le support et le bâti.

2. Filtre selon la revendication 1, caractérisé en ce que le bâti (17) et l'élément filtrant (1) fixé à lui de façon amovible a été disposé en vue de pouvoir être déplacé par rapport au support fixe (3) sous l'effet de la pression.

3. Filtre selon la revendication 1 ou 2, caractérisé en ce que le bâti (17) et le support (3) sont interconnectés par une barre d'arbre (2), et en ce qu' une précontrainte a été générée au moyen d'un écrou de blocage (18) vissé sur la barre d'arbre .

4. Filtre selon la revendication 3, caractérisé en ce que la barre d'arbre (2) s'étend à travers l'élément filtrant (1) sur toute sa longueur jusqu'à son extrémité opposée au bâti (17), à laquelle l'élément est fixé à l'extrémité de la barre d'arbre au moyen d'un écrou (7) ou de tout autre moyen de fixation similaire.

5. Filtre selon la revendication 4, caractérisé en ce que la barre d'arbre (2) est constituée de deux éléments interconnectés de façon amovible, de telle sorte que le premier élément (21) connecte le support (3) au bâti (17) et que le second élémént (22) forme une extension amovible de la première partie s étendant vers l'extrémité de l'élément filtrant (1) opposée au bâti.

6. Filtre selon l'une quelconque des revendications précédentes, caractérisé en ce que l'élément filtrant en forme de boîtier (1) comprend une enveloppe d'un matériau perméable filtrant (9) et un couvercle fermé (4) à son extrémité.

7. Filtre selon l'une quelconque des revendications précédentes, caractérisé en ce que l'élément filtrant (1) comprend une enveloppe perméable (8,9) présentant la forme d'un cylindre de révolution.

8. Filtre selon l'une quelconque des revendications précédentes, caractérisé en ce que l'ouverture de dérivation (14) est un orifice d'admission essentiellement annulaire s'ouvrant entre le support annulaire (3) et le bâti (17) s'appuyant contre lui.

9. Filtre selon l'une quelconque des revendications précédentes, caractérisé en ce que le support (3) est prévu avec une ouverture d'admission (12), ou plus, destinée au flux (13) à filtrer pour le conduire à l'intérieur de l'élément filtrant.

10. Filtre selon les revendications 8 et 9, caractérisé en ce que le bâti (17) définit des ouvertures d'écoulement (19) en retrait à partir de son bord, telles que des liaisons (20) entre les ouvertures et la barre de bord interdisant à l'écoulement en contre-courant de revenir de l'élément filtrant (1) vers l'ouverture de dérivation (14).
